# EUROPEAN PATENT APPLICATION

(11) **EP 2 506 129 A2**
(43) Date of publication of application: **03.10.2012**
(21) Application number: 12161181.8
(22) Date of filing: 26.03.2012
(51) Int. Cl.: G06F 3/041, G06F 3/033, G06F 3/043, G06F 3/042

(54) **Electronic pen and projector system using the same**

(30) Priority: 31.03.2011 JP 2011078013
(71) Applicant: Hitachi Consumer Electronics Co., Ltd., Tokyo 100-0004 (JP)
(72) Inventor: Onodera, Shinji, Tokyo, 100-8220 (JP); Matsuzawa, Toshihiko, Tokyo, 100-8220 (JP); HOTTA, Nobutaka, Tokyo, 100-8220 (JP)
(74) Representative: Calderbank, Thomas Roger

(57) **Abstract**

There is provided an electronic pen that reduces reflected waves of ultrasonic waves from a screen, with a simple structure and there is realized a projector system that improves the position detection precision of the electronic pen. The electronic pen comprises a longitudinal axis-shaped housing body having a pen tip at a tip end portion thereof, an ultrasonic wave transmitting portion provided inside the housing body relative to the pen tip for generating ultrasonic waves, an infrared ray transmitting portion arranged adjacent to the ultrasonic wave transmitting portion for generating an infrared ray, and an ultrasonic wave guide for reflecting components, toward a pen tip side, among the ultrasonic waves generated from the ultrasonic wave transmitting portion.

## Description

The present invention relates to a projector system which projects an image onto a screen and can carry out an interactive operation using an electronic pen.

Recently, a projector system is released which carries an interactive function that projects an image of a PC on a screen (white board) by a projector and allows characters and figures to be handwriting-inputted directly onto the screen by using an electronic pen or the like which is an accessory. In such a system, there are employed various systems for detecting the position of the electronic pen on the screen. JP-A No. 2005-115870 describes a structure in which infrared light and supersonic waves are generated from an electronic pen and a projector carries a signal processor which detects the infrared light and the supersonic waves, which are emitted from the electronic pen, and obtains information on the position of the electronic pen. According to this structure, even if the screen does not have a special function of detecting the position of the electronic pen, it can be used.

Moreover, JP-A No. 2007-058425 describes a structure in which an electronic pen has a means provided therein which detects the orientation of supersonic wave receiving portions receiving transmitted supersonic waves, and suppresses the transmission of the supersonic waves toward an orientation remote from the orientation of the supersonic wave receiving portions, in order to suppress the generation of reflected waves produced by striking of the supersonic waves from the electronic pen against a reflecting object.

In the position detecting system using the supersonic waves, the infrared ray and the supersonic waves which are emitted from the electronic pen are detected by an infrared sensor and two supersonic wave receivers spaced a predetermined interval from each other, and the position of the electronic pen is calculated by the principal of a triangulation method, from arrival time of the sound waves until detected by the two supersonic wave receivers from the detection of the infrared ray. In the structure described in JP-A No. 2005-115870, the supersonic wave receivers are attached to the projector which is installed on, for example, a ceiling spaced a predetermined interval from the screen. Therefore, in addition to the supersonic waves that reach the supersonic wave receivers from the electronic pen via straight routes, the supersonic waves reflected by the screen or the like are superposedly received by the supersonic wave receivers. The both are different in an arrival distance, so that an error in the position detection of the electronic pen is produced and drawing performance in an interactive function is deteriorated.

According to the technology described in JP-A No. 2007-058425, the electronic pen detects the orientation of the supersonic wave receivers and the generation of the reflected waves is suppressed by suppressing the transmission of the supersonic waves toward the orientation remote from the orientation of the supersonic wave receivers. In this structure, an orientation detecting portion for detecting the orientation of the supersonic wave receivers and a supersonic wave suppressing portion for suppressing the transmission of the supersonic waves from some of the plural supersonic wave transmitting portions are required to be provided at the electronic pen, and the structure of the electronic pen is made complex.

A preferred aim of the present invention is to provide an electronic pen that may reduce reflected waves of supersonic waves reflected on a screen, with a simple structure, and to realize a projector system that improves the position detection precision of the electronic pen.

The electronic pen according to the present invention comprises a longitudinal axis-shaped housing body having a pen tip at a tip end portion thereof, a supersonic wave transmitting portion provided inside the housing body relative to the pen tip for generating supersonic waves, an infrared ray transmitting portion arranged adjacent to the supersonic wave transmitting portion for generating an infrared ray, and a supersonic wave guide for reflecting components, toward a pen tip side, among the supersonic waves generated from the supersonic wave transmitting portion.

According to the present invention, with the simple structure, it is possible to reduce the reflected waves of the supersonic waves, transmitted from the electronic pen, which are reflected on the screen. Thereby, it is possible to realize a low cost projector system that is superior in the drawing performance in the interactive function.

In the drawings:
Fig. 1 is a system structure diagram showing an embodiment of a projector system according to the present invention.
Fig. 2A is a side view showing a first embodiment of an electronic pen according to the present invention.
Fig. 2B is a view showing a supersonic wave guide.
Fig. 3 is a view showing a principle of pen coordinate detection using an infrared ray and supersonic waves.
Fig. 4A is a view for explaining generation of the reflected waves of supersonic waves (conventional electronic pen).
Fig. 4B is a view for explaining generation of the reflected waves of supersonic waves (electronic pen of the first embodiment).
Fig. 5 is a side view showing a second embodiment of the electronic pen according to the present invention.
Fig. 6 is a side view showing a third embodiment of the electronic pen according to the present invention.
Fig. 7 is a view showing an example in which a pointing device is added to the electronic pen.
Fig. 8A is a view showing output waveforms obtained in supersonic wave microphones (the conventional electronic pen).
Fig. 8B is a view showing output waveforms obtained in supersonic wave microphones (the electronic pen according to the first embodiment).
Fig. 8C is a view showing output waveforms obtained in supersonic wave microphones (the electronic pen according to the second embodiment).
Fig. 9A is a view showing a drawing performance of a projector system (the conventional electronic pen).
Fig. 9B is a view showing a drawing performance of a projector system (the electronic pen according to the embodiment 1).
Fig. 9C is a view showing a drawing performance of a projector system (the electronic pen according to the embodiment 2).

According to the present invention, a supersonic wave transmitting portion is provided at a pen tip of an electronic pen, the sound wave intensity of supersonic waves radiated from the supersonic wave transmitting portion is adapted so that it has directivity in a direct view direction toward supersonic wave microphones, and the radiation-angle of the supersonic waves is made narrower in order that unnecessary reflected waves are prevented. In the following embodiments, the radiation-angle of the supersonic waves relative to a vertical surface in a normal direction relative to a screen is made narrower and the sound wave intensity is adapted to be enhanced. The embodiments will be concretely explained hereinafter with reference to the drawings.

### [Embodiment 1]

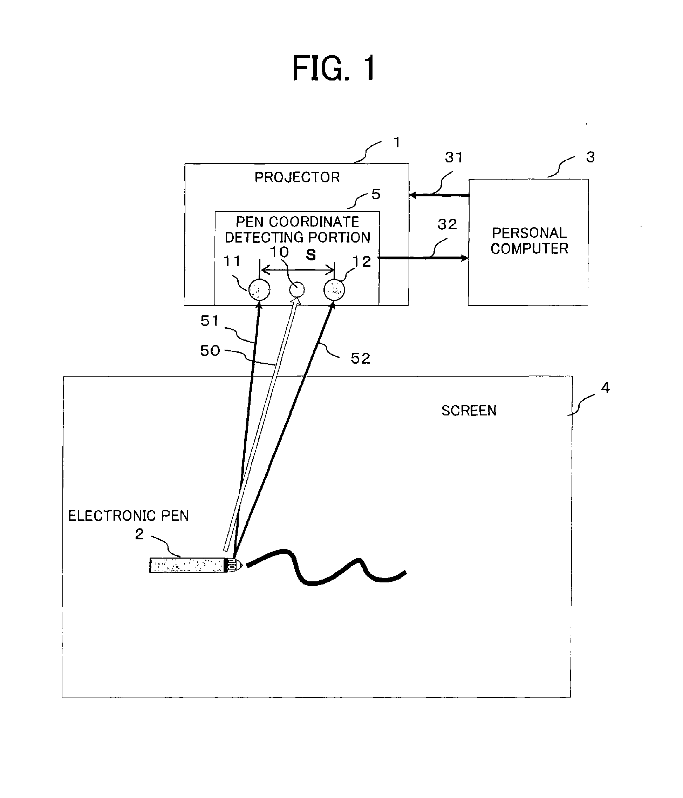

Fig. 1 is a system structure diagram showing an embodiment of a projector system according to the present invention. The projector system includes a projector 1, an electronic pen 2, a personal computer (hereinafter abbreviated as "PC") 3, and a screen 4. The projector 1 is connected to the PC 3, and projects and displays an image on the screen 4, on the basis of an image signal 31 supplied from the PC 3. The electronic pen 2 is an input device for handwriting-inputting characters, figures, etc. on the screen 4, and for performing mouse-operation with respect to the PC 3. The electronic pen 2 generates signals of an infrared ray 50 and supersonic waves 51, 52 for coordinate input and operation signals. The signals of the infrared ray and supersonic waves which are generated from the electronic pen 2 are detected by a pen coordinate detecting portion 5, attached to the projector 1, which calculates the position of the electronic pen 2 (two-dimensional coordinates on the screen 4, hereinafter referred to as "pen coordinates"). The pen coordinate detecting portion 5 has an infrared sensor 10 for detecting the infrared ray signal 50 and two supersonic wave microphones (receivers) 11, 12 for detecting the supersonic wave signals 51, 52. The two supersonic wave microphones (receivers) 11, 12 are provided at positions spaced a predetermined distance S from each other in the projector 1. Information on the calculated pen coordinates is notified to the PC 3 as a mouse signal 32. The PC 3 produces a drawing signal on the basis of the received information (mouse signal 32) on the pen coordinates, and causes the characters and the figures to be drawn on the screen 4 via the projector 1.

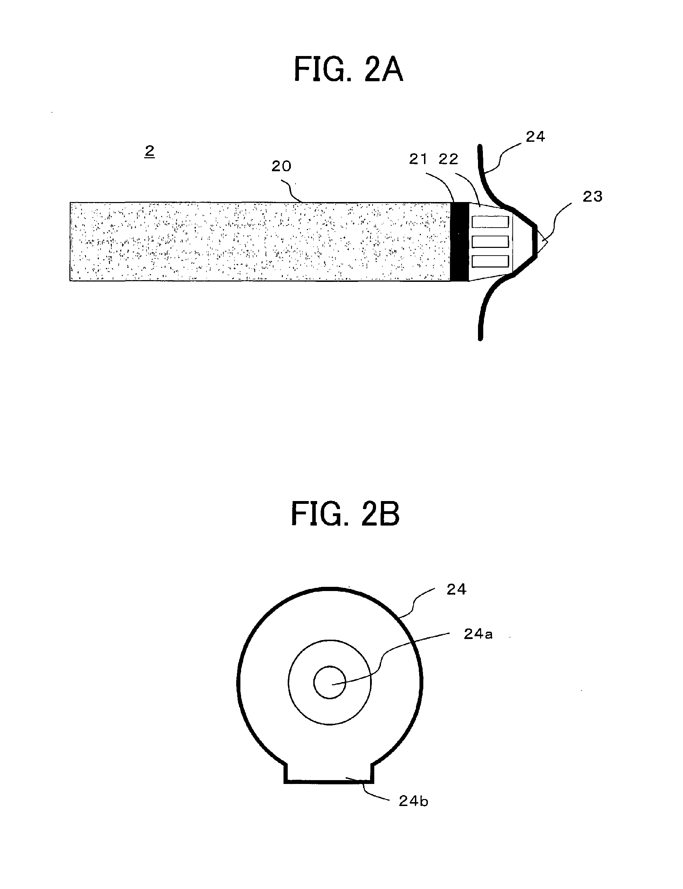

Figs. 2A and 2B are views illustrating an electronic pen according to a first embodiment of the present invention, Fig. 2A is a side view, and Fig. 2B shows a supersonic wave guide 24 attached to the electronic pen (view viewed from a pen tip side).

The electronic pen 2 includes a longitudinal axis-shaped housing body 20 having a pen tip 23 at a tip end portion thereof, and an infrared ray transmitting portion 21 and a supersonic wave transmitting portion 22 which are adjacent the pen tip 23 inward of the pen tip 23. When the pen tip 23 is press-applied onto the screen 4 or the like, an infrared ray having a wavelength of, for example, 950nm is generated from the infrared ray transmitting portion 21, a supersonic wave having a frequency of, for example, 40kHz is generated from the supersonic wave transmitting portion 22, and they are concentrically radiated around a periphery of the electronic pen 2.

In this embodiment, the supersonic wave guide 24 which reflects the supersonic wave is attached to the pen tip 23 side of the supersonic wave transmitting portion 22 (in Fig. 2A, the cross-sectional view of the supersonic wave guide 24 is shown) . The supersonic wave guide 24 is an umbrella-shaped transparent disk, in a center of which a mounting-hole 24a through which the pen tip 32 is penetrated is provided. As a material for the supersonic wave guide 24, for example, polycarbonate is suitable. Among supersonic waves emitted from the supersonic wave transmitting portion 22, components which travel toward the pen tip side, namely, the screen 4 are reflected by the supersonic wave guide 24 and adapted so that they have directivity in a direct view direction toward the supersonic wave microphones 11, 12. The reason why the transparent material is used as the material for the supersonic wave guide 24 is that the infrared ray emitted from the infrared ray transmitting portion 21 is allowed to reach the infrared sensor 10 of the projector 1 without being interrupted by the supersonic wave guide 24 and the user is not prevented from confirming the position of the pen tip 23 by sight when the user handwriting-inputs the characters and figures. The cross-sectional shape of the supersonic wave guide 24 is made so as to have a shape that is curved from a center to a periphery thereof. This reason is that even if the posture of the electronic pen 2, namely, the axial direction, is slightly inclined from a direction perpendicular to the screen 4, supersonic wave components toward the screen 4 can be positively reflected. Moreover, a flat portion 24b is provided on a part of the periphery of the supersonic wave guide 24, thus preventing the electronic pen 2 from being rolled.

In the electronic pen 2 of this embodiment constructed as described above, it is possible to regulate the radiation directions of the supersonic waves with the simple structure in which the supersonic wave guide 24 is attached to the tip end portion, so that the electronic pen having a high utility value is provided at low cost.

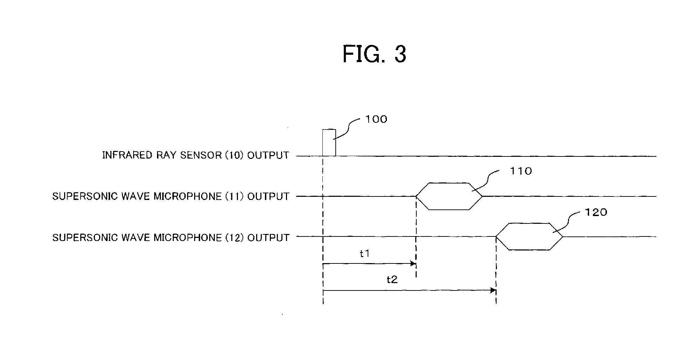

Next, the operation of the electronic pen 2 according to this embodiment and of the projector system will be explained. Fig. 3 is a view illustrating the principle of pen coordinate detection using the infrared ray and the supersonic waves. When the pen tip 23 of the electronic pen 2 is press-applied to the screen 4, a reference pulse of the infrared ray is produced from the infrared ray transmitting portion 21, simultaneously a burst pulse of the supersonic wave is produced from the supersonic wave transmitting portion 22, and the pulses propagate. The infrared sensor 10 of the pen coordinate detecting portion 5 provided at the projector 1, and the supersonic wave microphones 11, 12 detect the infrared ray and the supersonic waves which have propagated. The infrared sensor 10 detects the infrared ray 50 and outputs a signal designated with reference sign 100. The supersonic wave microphones 11, 12 detect the supersonic waves 51, 52 and output signals designated with reference signs 110, 120. While the infrared ray 50 instantaneously reaches the infrared sensor 10, the supersonic waves 51, 52 have a slower propagation speed than the infrared ray 50 and thus, reach the supersonic wave microphones 11, 12 at a later time than the infrared ray. The supersonic wave microphones 11, 12 are arranged at the different positions spaced the distance S from each other, so that at that time, the delay time of the supersonic wave 51 and the delay time of the supersonic wave 52 are t1 and t2, respectively.

The pen coordinate detecting portion 5 calculates distances d1, d2 between the supersonic wave microphones 11, 12 and the electronic pen 2 on the basis of the delay times t1, t2, and calculates the coordinates (pen coordinates) of the electronic pen 2 on the screen 4 by using the distance S between the microphones, and distances (already known) between the microphones 11, 12 and the screen 4. The infrared ray pulse 100 and the supersonic wave burst pulses 110, 120 are intermittently are outputted from the electronic pen 2 at a fixed time interval (for example, an interval of 16 msec), thus making it possible to handwriting-input the characters and the figures by connecting the calculated pen coordinates. In such a triangulation method, the greater the distance S between the microphones, higher the calculation precision of the pen coordinates. Therefore, it is preferable to provide the supersonic wave microphones 11, 12 at the both end positions of the projection surface of the projector 1.

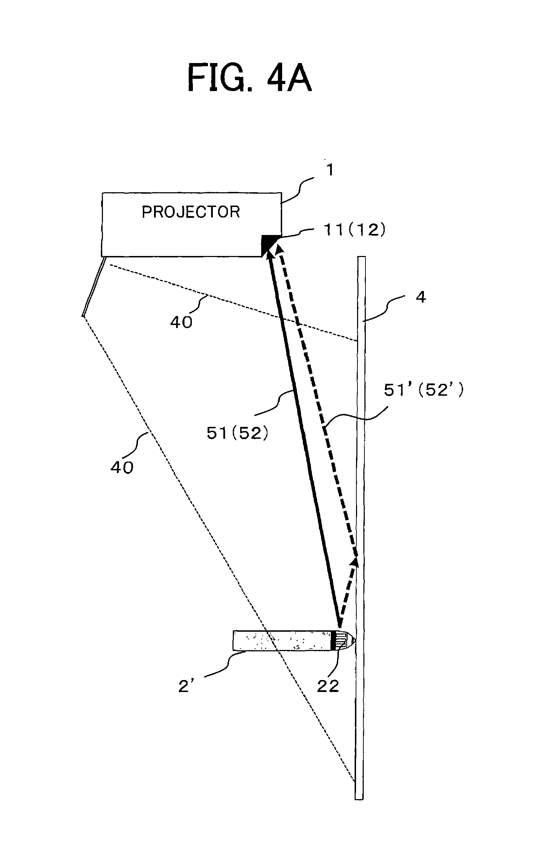

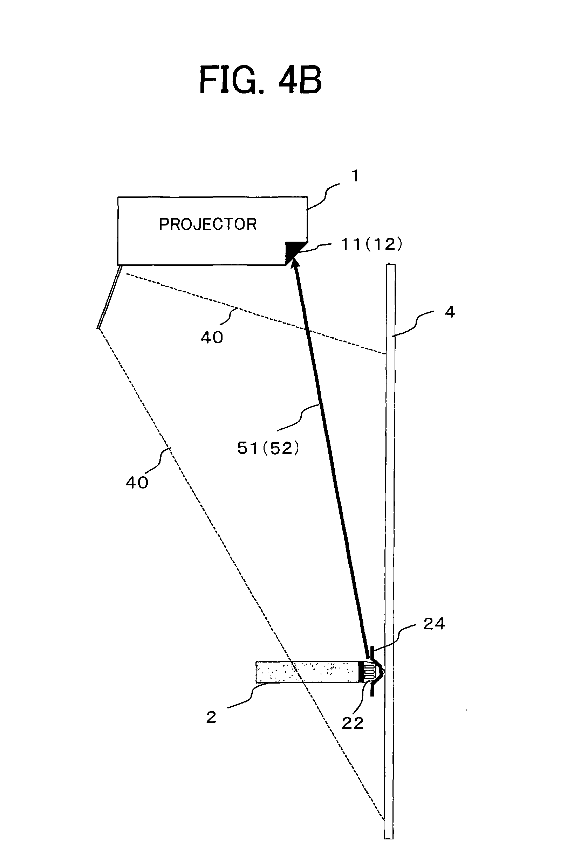

Figs. 4A and 4B are views for explaining the generation of reflected waves of the supersonic waves. Fig. 4A shows a case where a conventional electronic pen is used for comparison, and Fig. 4B illustrates a case where the electronic pen according to this embodiment is used.

The projector 1 is installed in a state hanging from a ceiling and projects an image light 40 on the screen 4. When the electronic pen 4 is press-applied onto the screen 4, the supersonic waves are produced from the supersonic wave transmitting portion 22 and propagate to the supersonic wave microphone 11 (12) provided at the projector 1. In the case of the electronic pen 2' having the conventional structure shown in Fig. 4A, in addition to the direct wave 51 (52) which reaches the supersonic wave microphone 11 (12) from the electronic pen via a straight route, an unnecessary reflected-wave 51' (52') which is to be once reflected by the screen 4 and reaches the supersonic wave microphone 11 (12) is produced. Therefore, the supersonic wave microphone 11 (12) receives the two waves, the waveform of an output signal 110 (120) is rippled, and an error in the delay time t1 (t2) to be detected is produced.

On the contrary, in the case of the electronic pen 2 according to this embodiment shown in Fig. 4B, the supersonic wave guide 24 is provided at the electronic pen 2. Among the supersonic waves emitted from the supersonic wave transmitting portion 22, wave components which travel toward the pen tip side, namely, the screen 4 are reflected by the supersonic wave guide 24. As a result, the wave which is to reach the supersonic wave microphone 11 (12) from the electronic pen 2 is only the straight wave 51 (52) that reaches the supersonic wave microphone 11 (12) via a straight route. Even if the unnecessary reflected-waves 51' (52') are present, they are considerably reduced. Thereby, the waveform of the output signal 110 (120) becomes a waveform based on the natural straight-wave 51 (52) only and the detection precision of the delay time t1 (t2) is improved.

### [Embodiment 2]

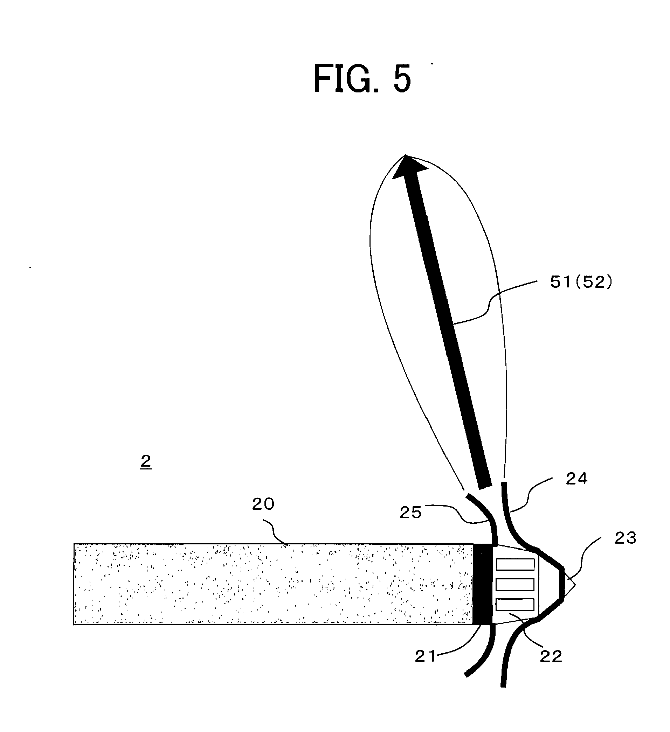

Fig. 5 is a side view illustrating an electronic pen according to a second embodiment of the present invention. The electronic pen 2 according to this embodiment has a structure in which two supersonic wave guides 24, 25 are provided so as to be opposed to each other in an axial direction and interpose the supersonic wave transmitting portion 22 therebetween (in the Fig. 5, cross-sections of the supersonic wave guides 24, 25 are shown). The supersonic wave guide 24 on the pen tip 23 side (first guide) has the same shape as that of the embodiment 1 (Fig. 2). The supersonic wave guide 25, on the infrared ray transmitting portion 21 side, (second guide) which is opposed to the supersonic wave guide 24 is also a umbrella-shaped transparent disk and has a mounting-hole in its center, through which the supersonic wave transmitting portion 22 is inserted. The second guide 25 has a cross-section that is curved in a direction opposite to the curving direction of the first guide 24. A space interposed between the both is of a horn-shape.

According to the electronic pen 2 of this embodiment, the first guide 24 reflects components toward the pen tip side, among the supersonic waves emitted from the supersonic wave transmitting portion 22. On the other hand, the second guide 25 reflects components toward the housing body 20 side, among the supersonic waves emitted from the supersonic wave transmitting portion 22. Thereby, the reflected waves reflected by the screen 4 are decreased (reduced) and, moreover, the radiation-angle of the supersonic waves emitted from the supersonic wave transmitting portion 22 is made narrower. That is, there are effects of improving the directivity to the supersonic wave microphone 11 (12) and of enhancing the intensity of the straight wave 51 (52) reaching the supersonic wave microphone via the straight route.

### [Embodiment 3]

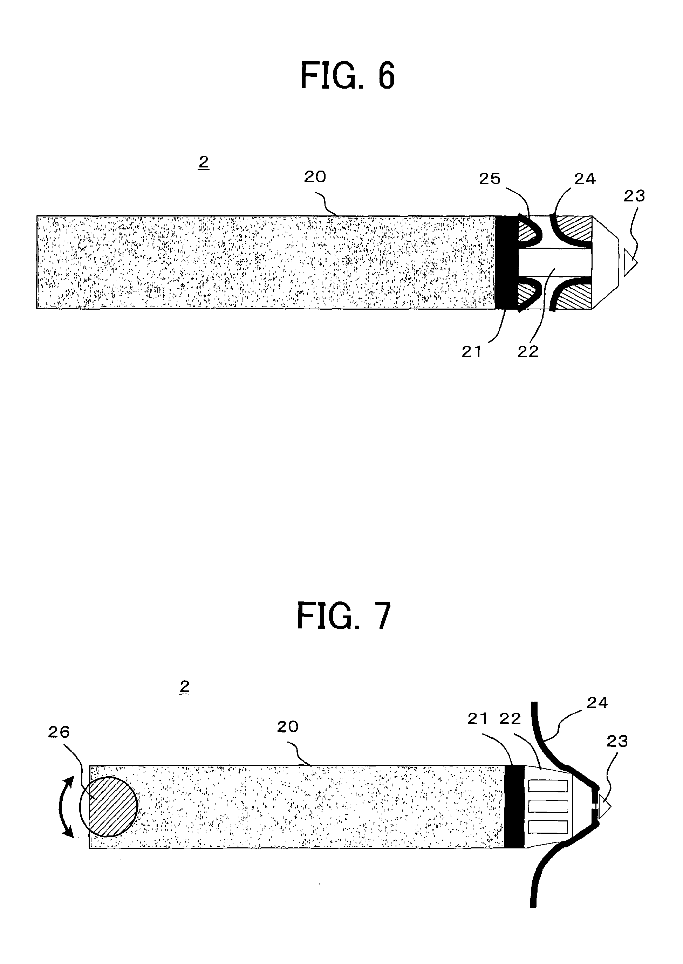

Fig. 6 is a side view illustrating an electronic pen according to a third embodiment of the present invention. The electronic pen 2 of this embodiment has a structure in which the two supersonic wave guides 24, 25 that are opposed to each other in the axial direction and interpose the supersonic wave transmitting portion 22 therebetween are built-in the electronic pen 2. That is, the two supersonic wave guides 24, 25 in the embodiment 2 (Fig. 5) are configured so as to be embedded in the electronic pen in such a manner that peripheral portions thereof do not project out of the outer periphery of the housing body 20. The cross-sections of the two supersonic wave guides 24, 25 are made curved in directions opposite to each other. A space interposed between the both is of a horn shape. The supersonic waves which are emitted from the supersonic wave transmitting portion 22 propagate to the outside from the space interposed between the two supersonic wave guides 24, 25. Incidentally, the supersonic wave guides 24, 25 in this embodiment may be made of opaque materials.

According to the electronic pen 2 of this embodiment, like the embodiment 2, there are provided the effects of decreasing (reducing) the reflected waves reflected on the screen 4 and of improving the directivity of the supersonic waves emitted from the supersonic wave transmitting portion 22. Moreover, the supersonic wave guides 24, 25 do not project out of the outer periphery of the housing body, so that the user is not prevented from confirming the position of the pen tip 23 by sight when the user handwriting-inputs the characters, and figures and the usability of the electronic pen 2 is improved.

In the respective embodiments 1-3, the following variations are possible. In the embodiments 1-3, the supersonic waves are adapted to be reflected by the supersonic wave guide (s), thereby providing the directivity and enhancing the supersonic wave intensity. As another method, supersonic waves to be radiated in unnecessary directions may be absorbed by a sound absorbing material (s) which is (are) provided on the surface(s) of the supersonic wave guide(s) for absorbing the supersonic wave guides.

Fig. 7 is a view illustrating an example in which a pointing device is added to the electronic pen. In this example, the pointing device 26 is incorporated into the rear end portion of the electronic pen 2 of the embodiment 1 (Fig. 2). The pointing device 26 may be provided at the different embodiments. The pointing device26 carries out various input operations with respect to the PC 3 and is equivalent to the conventional mouse or track ball. Concretely, it is configured so as to have the function of selecting an eraser, the thickness of the pen and the colors of the pen, or the like at the time of the handwriting-inputting by the electronic pen, whereby an interactive operation is made more satisfactory. By the input operation by the pointing device 26, the infrared ray from the infrared ray transmitting portion 21 and the supersonic waves from the supersonic wave transmitting portion 22 are transmitted to the projector 1 as signals thereof. In this case, it is possible to also avoid an erroneous operation at the time of the operation, by using the electronic pen 2 which has the supersonic wave guide 24 attached thereto.

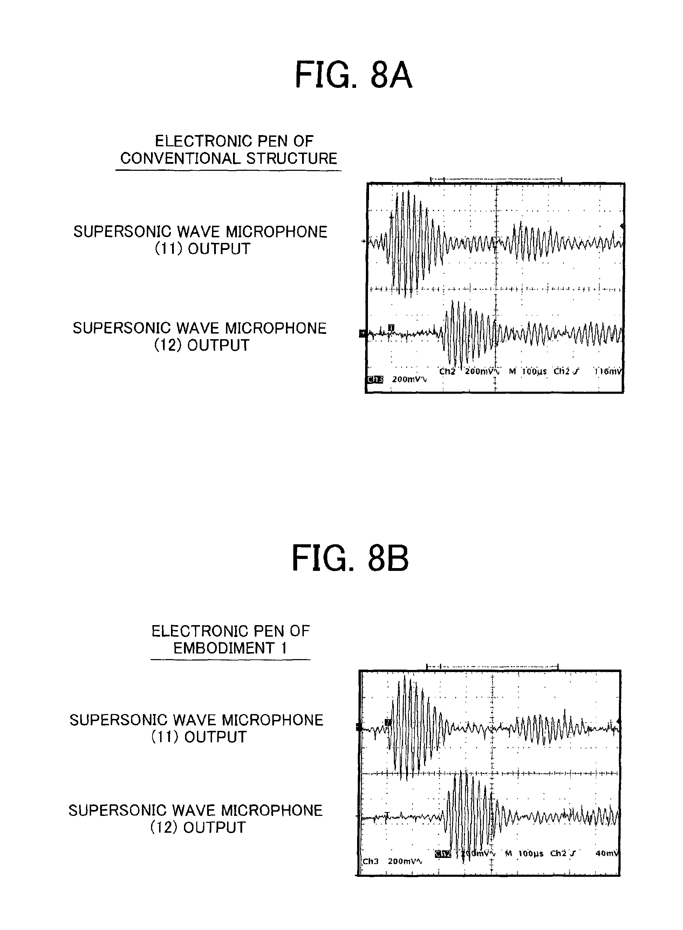

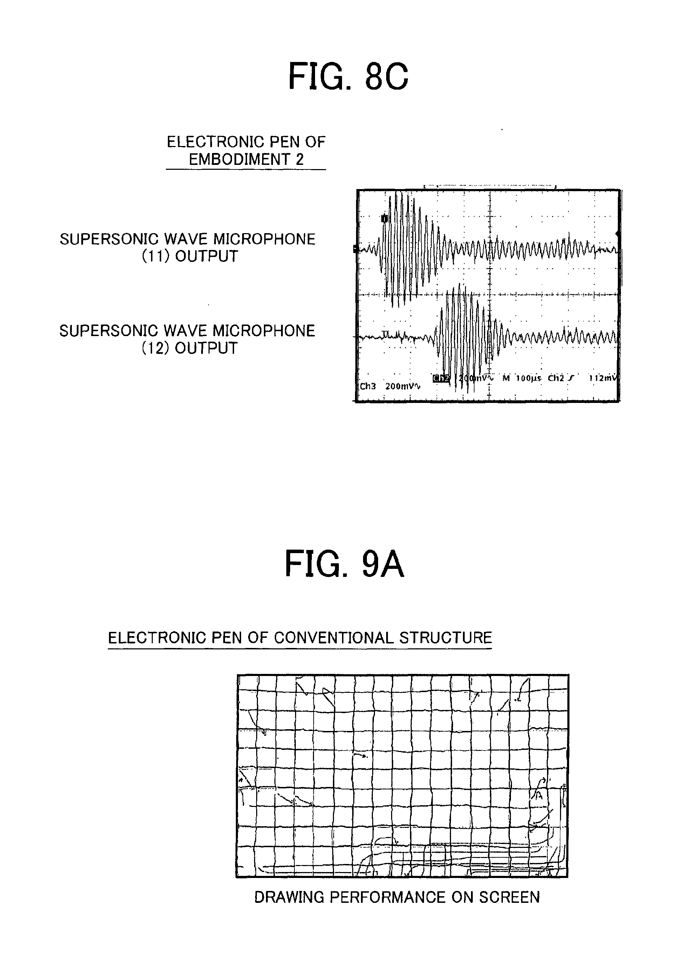

Next, the effects of the electronic pen according to the above-mentioned embodiment will be concretely explained. Figs. 8A - 8C are views confirming the effects of this embodiment by output waveforms obtained in the supersonic wave microphones. Fig. 8A shows a case where the output waveforms are obtained in the electronic pen having the conventional structure. Fig. 8B shows a case where the output waveforms are obtained in the electronic pen according to the embodiment 1. Fig. 8C shows a case where the output waveforms are obtained in the electronic pen according to the embodiment 2 for comparison. A test method shows output waveforms which are obtained from the respective supersonic wave microphones 11, 12 when supersonic waves (burst pulses) are transmitted by press-applying the electronic pen 2 onto an upper position within the screen 4 and are received by the supersonic wave microphones 11, 12 in the projector 1.

In the case of the electronic pen having the conventional structure (without the supersonic wave guide), sub signals which are regarded as the reflected waves are continued subsequently to main signals which are regarded as the straight waves (Fig. 8A). On the contrary, in the case of the electronic pen 2 of the embodiment 1 (with the one supersonic wave guide), the sub signals by the reflected waves are decreased (Fig. 8B). Moreover, in the case of the embodiment 2 (with the two supersonic wave guides), the sub signals by the reflected waves are decreased and the level of the main signals by the straight waves is increased.

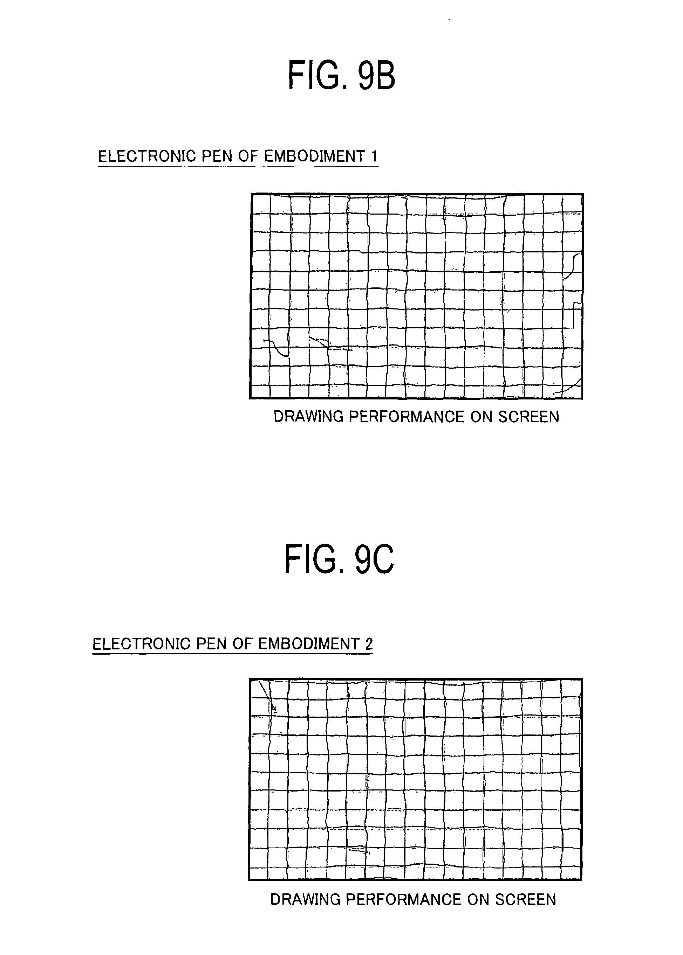

Figs. 9A - 9C are views confirming the effects of this embodiment by the drawing performance of the projector system. Fig. 9A shows the case of the electronic pen having the conventional structure. Fig. 9B shows the case of the electronic pen of the embodiment 1. Fig. 9C shows the case of the electronic pen of the embodiment 2 for comparison. A test method shows a figure which is drawn on the screen 4 when a test figure which is comprised of vertical lines and horizontal lines is written within the screen 4 by the electronic pen 2.

In the case of the electronic pen having the conventional structure (without the supersonic wave guide), there occur a great number of phenomena in which that figure is short of its midway portions (parts of the lines) which are erroneously drawn on another position (erroneous drawing)(moving destinations are shown by arrows) (Fig. 9A). On the contrary, in the case of the electronic pen of the embodiment 1 (with the one supersonic wave guide), the erroneous drawing is reduced (Fig. 9B) and, in the case of the electronic pen of the embodiment 2 (with the two supersonic wave guides), the erroneous drawing rarely occurs (Fig. 9C).

As described above, by using the electronic pen of this embodiment, it is possible to realize the projector system which improves the detection precision of the position of the electronic pen and is superior in the drawing performance in the interactive function. Moreover, the electronic pen of this embodiment can regulate the propagation directions of the supersonic waves with the simple structure, so that it is possible to realize the low-cost projector system.

## Claims

1. An electronic pen comprising:
a longitudinal axis-shaped housing body having a pen tip at a tip end portion thereof;
a supersonic wave transmitting portion provided inside the housing body relative to the pen tip for generating supersonic waves;
an infrared ray transmitting portion arranged adjacent to the supersonic wave transmitting portion for generating an infrared ray; and
a supersonic wave guide for reflecting components, toward a pen tip side, among the supersonic waves generated from the supersonic wave transmitting portion.

2. The electronic pen according to claim 1, wherein the supersonic wave guide comprises an umbrella-shaped disk attached to the pen tip side of the supersonic wave transmitting portion.

3. The electronic pen according to claim 1, wherein the supersonic wave guide comprises two umbrella-shaped disks provided so as to be opposed to each other in an axial direction and interpose the supersonic wave transmitting portion therebetween.

4. The electronic pen according to claim 2 or 3, wherein the supersonic wave guide is built-in an outer periphery surface of the housing body.

5. The electronic pen according to claim 2 or 3, wherein the supersonic wave guide is formed of a transparent material.

6. A projector system connected to a personal computer and projecting an image in the personal computer on a screen from a projector, the projector system comprising:
an electronic pen according to any one of claims 1 - 5;
and
a pen coordinate detecting portion attached to the projector for detecting the infrared ray and the supersonic waves by an infrared sensor and two supersonic wave microphones and detecting coordinates of the electronic pen on the screen from signals of the detected infrared ray and supersonic waves; wherein the coordinates of the electronic pen on the screen are notified to the personal computer.

7. The projector system according to claim 6, wherein the two supersonic wave microphones which are provided at the pen coordinate detecting portion are arranged at both ends of a projection surface of the projector.
